# EUROPEAN PATENT APPLICATION

(11) **EP 4 660 778 A1**
(43) Date of publication of application: **10.12.2025**
(21) Application number: 25702693.0
(22) Date of filing: 06.02.2025
(51) Int. Cl.: G06F 3/14, H04N 9/31

(54) **ELECTRONIC DEVICE AND CONTROL METHOD THEREFOR**

(30) Priority: 19.04.2024 KR 20240052860
(71) Applicant: Samsung Electronics Co., Ltd., Suwon-si, Gyeonggi-do 16677 (KR)
(72) Inventor: KIM, Sangwon, Suwon-si, Gyeonggi-do 16677 (KR); LEE, Joohyun, Suwon-si, Gyeonggi-do 16677 (KR)
(74) Representative: Appleyard Lees IP LLP
(86) International application number: PCT/KR2025/099322
(87) International publication number: WO 2025/221124

(57) **Abstract**

An electronic apparatus includes an input/output (I/O) interface connected to a display device including a plurality of display modules, memory storing preset resolution, and at least one processor configured to obtain position information indicating positions of the plurality of display modules, obtain structure information indicating a structure of the plurality of display modules based on the position information, classify the plurality of display modules as at least one main group based on the structure information, obtain target resolution based on the structure information, obtain upscaling ratio information based on the preset resolution and the target resolution, and transfer the structure information and the upscaling ratio information to the at least one main group through the I/O interface, and wherein the plurality of display modules are modules which display an image based on the structure information and the upscaling ratio information.

## Description

### [Technical Field]

The present disclosure relates to an electronic apparatus and a controlling method thereof and more particularly, to an electronic apparatus providing an image to a plurality of display modules and a controlling method thereof.

### [Background Art]

One image, e.g., an image selected/designated by a user, may be displayed on a plurality of display modules, such as those used in an LED cinema product. Typically, one electronic apparatus directly processes and provides the image to each display module of the plurality of display modules. To perform an image processing operation, the electronic apparatus should "know" all relevant information about the plurality of display modules.

If the plurality of display modules have already been installed and the user wants to correct the position, the number, or the like of the plurality of display modules then the user needs to manually change the settings directly on the electronic apparatus performing the image processing operation.

Also, there is a problem that if one electronic apparatus performs the image processing operation, then due to an increase in resources or the amount of operation processing, the processing speed of the electronic apparatus is decreased/slowed down and/or the image display operation is delayed.

Also, there is another problem that as the specification of hardware of the electronic apparatus performing image processing is fixed, if the plurality of display modules are expanded, i.e., by adding more display modules, then it is difficult to change the hardware data (hardware specification) of the electronic apparatus.

### [Disclosure]

### [Technical Solution]

The disclosure is conceived for addressing the aforementioned technical problems, and an aspect of the disclosure is to provide an electronic apparatus which provides information related to scaling to a plurality of display modules of the electronic apparatus and perform a scaling operation in the plurality of display modules themselves to process an image, and a controlling method thereof.

According to an embodiment, an electronic apparatus includes an input/output (I/O) interface connected to a display device including a plurality of display modules, memory storing preset resolution, and at least one processor, wherein the at least one processor is configured to obtain position information indicating positions of the plurality of display modules, obtain structure information indicating structures of the plurality of display modules based on the position information, classify the plurality of display modules as at least one main group based on the structure information, obtain target resolution based on the structure information, obtain upscaling ratio information based on the preset resolution and the target resolution, and transfer the structure information and the upscaling ratio information to the at least one main group through the I/O interface, and wherein the plurality of display modules are modules which display an image based on the structure information and the upscaling ratio information.

The position information may include information indicating a position of each of the plurality of display modules, and the structure information may include at least one of a position, a sequence, or a shape of the plurality of display modules.

The at least one processor may obtain an input image, obtain main group information including the number of the at least one main group and an area of the at least one main group, obtain a divided image by dividing the input image based on the main group information, and transfer the divided image to the display device through the I/O interface.

The at least one processor may receive first position information from a first display module connected to the I/O interface, receive second position information from a second display module connected to the I/O interface, classify at least one display module identified from the first position information as a first main group, and classify the at least one display module identified from the second position information as a second main group.

The at least one processor may obtain first structure information corresponding to the first main group based on the first position information, and obtain second structure information corresponding to the second main group based on the second position information.

The at least one processor may transfer the upscaling ratio information and the first structure information to the first display module through the I/O interface, and transfer the upscaling ratio information and the second structure information to the second display module through the I/O interface.

The at least one processor may obtain an input image, obtain a first divided image and a second divided image by dividing the input image based on a first area of the first main group and a second area of the second main group, transfer the first divided image to the first display module through the I/O interface, and transfer the second divided image to the second display module through the I/O interface.

The first divided image may be displayed by upscaling through the at least one display module classified as the first main group, and the second divided image may be displayed by upscaling through the at least one display module classified as the second main group.

The at least one processor may obtain the target resolution based on preset restrictive resolution stored in the memory, obtain target module information including a target display module to display an image among the plurality of display modules based on the target resolution, and transfer the structure information, the upscaling ratio information, and the target module information to the display device through the I/O interface.

The target resolution may be first target resolution, and the upscaling ratio information may be first upscaling ratio information, wherein the at least one processor, based on the positions of the plurality of display modules included in the display device being changed, may obtain new structure information indicating the positions of the plurality of changed display modules, obtain second target resolution based on the new structure information, obtain second upscaling ratio information based on the preset resolution and the second target resolution, and transfer second structure information and the second upscaling ratio information to the display device through the I/O interface.

According to an embodiment, there is provided a system comprising an electronic apparatus and a display device including a plurality of display modules. The display device and/or at least some of the plurality of display modules may be configured to operate substantially as described herein. For example, the display modules may be configured to at least display an image based on structure information and upscaling ratio information.

According to an embodiment, a method of controlling an electronic apparatus connected to a display device including a plurality of display modules and storing preset resolution includes obtaining position information indicating positions of the plurality of display modules, obtaining structure information indicating structures of the plurality of display modules based on the position information, classifying the plurality of display modules as at least one main group based on the structure information, obtaining target resolution based on the structure information, obtaining upscaling ratio information based on the preset resolution and the target resolution, and transferring the structure information and the upscaling ratio information to the at least one main group, wherein the plurality of display modules are modules which display an image based on the structure information and the upscaling ratio information.

The position information may include information indicating a position of each of the plurality of display modules, and the structure information may include at least one of a position, a sequence, or a shape of the plurality of display modules.

The control method may include obtaining an input image, obtaining main group information including the number of the at least one main group and an area of the at least one main group, obtaining a divided image by dividing the input image based on the main group information, and transferring the divided image to the display device.

The obtaining the position information may include receiving first position information from a first display module connected to the electronic apparatus, and receiving second position information from a second display module connected to the electronic apparatus, wherein the classifying as the main group includes, classifying at least one display module identified from the first position information as a first main group, and classifying the at least one display module identified from the second position information as a second main group.

The obtaining the structure information may include obtaining first structure information corresponding to the first main group based on the first position information, and obtaining second structure information corresponding to the second main group based on the second position information.

The transferring may include transferring the upscaling ratio information and the first structure information to the first display module, and transferring the upscaling ratio information and the second structure information to the second display module.

The control method may include obtaining an input image, obtaining a first divided image and a second divided image by dividing the input image based on a first area of the first main group and a second area of the second main group, transferring the first divided image to the first display module, and transferring the second divided image to the second display module.

The first divided image may be displayed by upscaling through the at least one display module classified as the first main group, and the second divided image may be displayed by upscaling through the at least one display module classified as the second main group.

The obtaining the target resolution may include obtaining the target resolution based on preset restrictive resolution stored in the electronic apparatus, the control method may further include obtaining target module information including a target display module to display an image among the plurality of display modules based on the target resolution, wherein the transferring may include transferring the structure information, the upscaling ratio information, and the target module information to the display device.

The target resolution may be first target resolution, and the upscaling ratio information may be first upscaling ratio information, wherein the control method, based on the positions of the plurality of display modules included in the display device being changed, may include obtaining new structure information indicating the positions of the plurality of changed display modules, obtaining second target resolution based on the new structure information, obtaining second upscaling ratio information based on the preset resolution and the second target resolution, and transferring second structure information and the second upscaling ratio information to the display device.

### [Description of Drawings]

The subject-matter of the present disclosure is best understood with reference to the accompanying figures, in which:
FIG. 1 is a view illustrating an electronic apparatus for providing an image to a display device;
FIG. 2 is a view illustrating exemplary structures of the display device of FIG. 1;
FIG. 3 is a view illustrating examples of devices for providing an image to a display device;
FIG. 4 is a block diagram illustrating a configuration of the electronic apparatus of FIG. 1;
FIG. 5 is a block diagram illustrating a detailed configuration of the electronic apparatus of FIG. 4;
FIG. 6 is a view illustrating an operation of obtaining structure information and upscaling ratio information;
FIG. 7 is a view illustrating a detailed operation of obtaining structure information and upscaling ratio information;
FIG. 8 is a view illustrating structure information obtained by identifying a surrounding module;
FIG. 9 is a view illustrating structure information obtained by using a connection sequence;
FIG. 10 is a view illustrating examples of main groups;
FIG. 11 is a view illustrating examples of images displayed on the display device;
FIG. 12 is a view illustrating an operation of dividing the image into main groups;
FIG. 13 is a view illustrating an operation of assigning address information to the main groups;
FIG. 14 is a view illustrating an operation of obtaining upscaling ratio information;
FIG. 15 is a view illustrating an operation of displaying a conversion image by using the upscaling ratio information;
FIG. 16 is a view illustrating an operation of providing a divided image to the display device;
FIG. 17 is a view illustrating an operation of changing structure information according to an embodiment;
FIG. 18 is a view illustrating an operation of changing structure information according to an embodiment;
FIG. 19 is a view illustrating an operation of changing structure information according to an embodiment; and
FIG. 20 is a view illustrating a method of controlling an electronic apparatus.

### [Mode for Invention]

The terms used in embodiments of the disclosure are selected as general terms which are currently widely used as much as possible in consideration of functions in the disclosure but may be varied depending on intention of those skilled in the art, a precedent, appearance of new technologies, or the like. Also, for any terms which are arbitrarily selected by the applicant , the meanings will be specifically described in the relevant description part of the disclosure. Therefore, the term used in the disclosure should be defined based on the meaning of the term and the entire content throughout the disclosure rather than the simple name of the term. In the following description, features which are described with reference to examples in parentheses are to be interpreted as optionally including being comprised of or formed of or with one, some or all of such examples.

In the specification, the expression such as "have", "may have", "include", or "may include" denotes the existence of such a characteristic (e.g. a numerical value, a function, an operation, or a component such as a part) and does not exclude the existence of additional characteristics.

The expression "at least one of A and/or B" should be interpreted to mean any one of "A" or "B" or "A and B".

The expression "1st", "2nd", "first", "second", or the like used in the specification may be used to describe various elements regardless of any order and/or degree of importance, wherein such expression is used only to distinguish one element from another element and is not intended to limit the relevant element.

Meanwhile, one element (e.g. a first element) being "(operatively or communicatively) coupled with/to" or "connected to" another element (e.g. a second element) should be interpreted to include both the case where the one element is directly coupled to the another element, and the case where the one element is coupled to the another element through the other element (e.g. a third element).

A singular expression includes a plural expression, unless obviously differently defined in the context. Terms such as "include" or "comprise" should be construed as designating that there are such characteristics, numbers, steps, operations, components, parts, or a combination thereof described in the specification but not as excluding the possibility of the existence or addition of one or more characteristics, numbers, steps, operations, components, parts, or a combination thereof.

A "module" or "part" may perform at least one function or operation and may be implemented as hardware or software, or as a combination of hardware and software. Also, a plurality of "modules" or "parts" may be integrated into at least one module and implemented as at least one processor, excluding a "module" or a "part" that needs to be implemented as specific hardware.

In the specification, the term "user" may refer to a person who uses an electronic device or a device that uses an electronic device (e.g. an Artificial Intelligence (AI) electronic device).

Hereinafter, an embodiment of the disclosure is more specifically described with reference to the appended drawings.

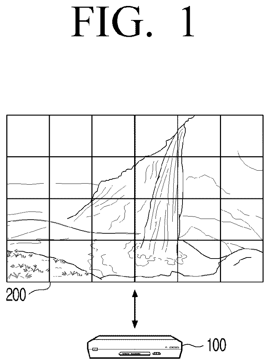

FIG. 1 is a view illustrating an electronic apparatus for providing an image to a display device 200.

With reference to FIG. 1, an electronic apparatus 100 may provide an image to the display device 200.

The electronic apparatus 100 may be a device providing an image. The electronic apparatus 100 may transfer the image to the display device 200.

The electronic apparatus 100 may be a device processing an image. The electronic apparatus 100 may transmit the processed image to the display device 200.

The display device 200 may include at least one display module. The display device 200 may be referred to as a display system.

As an example, the display device 200 may be implemented as one display module. The display device 200 may display an image provided by the electronic apparatus 100 on one display module.

As an example, the display device 200 may be implemented as a plurality of display modules. The display device 200 may display an image provided by the electronic apparatus 100 on the plurality of display modules. Each of the plurality of display modules may partially display an image corresponding to each of the plurality of display modules.

As an example, the display device 200 may include a separate processor or a controller for controlling the plurality of display modules. The processor or controller for controlling the plurality of display modules may be included in a specific display module of the plurality of display module. The specific display module may be referred to as a management module, a control module, or a representative module.

As an example, the separate processor or the controller for controlling the plurality of display modules may be included in the electronic apparatus 100. The electronic apparatus 100 may directly control the plurality of display modules included in the display device 200.

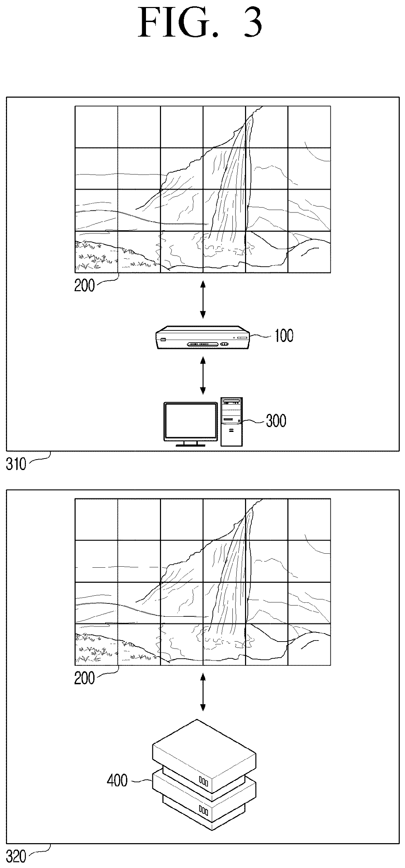

As an example, the separate processor or the controller for controlling the plurality of display modules may be included in an external device. The description related to the above is described in FIG. 3.

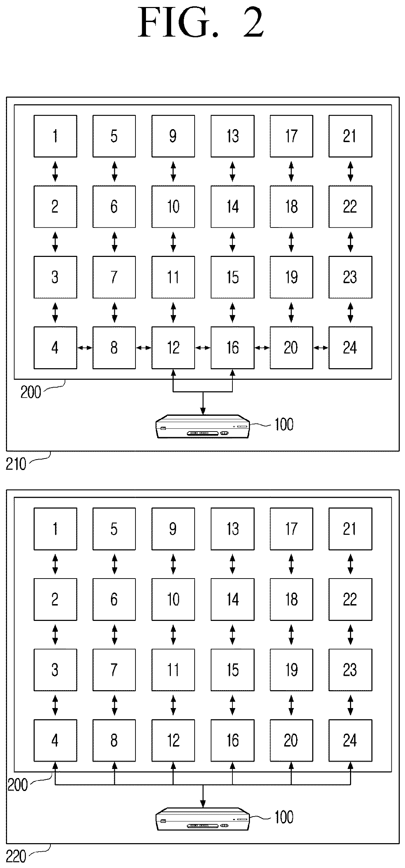

FIG. 2 is a view illustrating exemplary structures of the display device 200 .

The electronic apparatus 100 may identify structure information of the display device 200. The structure information may be information indicating arrangement of at least one display module included in the display device 200.

With reference to an example 210 of FIG. 2, the display device 200 may include modules 1 to 24. The modules may designate display modules.

The modules 1, 2, 3, 4 may be sequentially connected. The modules 5, 6, 7, 8 may be sequentially connected. The modules 9, 10, 11, 12 may be sequentially connected. The modules 13, 14, 15, 16 may be sequentially connected. The modules 17, 18, 19, 20 may be sequentially connected. The modules 21, 22, 23, 24 may be sequentially connected. The modules 4, 8, 12 may be sequentially connected. The modules 16, 20, 24 may be sequentially connected. The modules 12, 16 may be connected to the electronic apparatus 100.

The electronic apparatus 100 may obtain position information of the plurality of display modules included in the display device 200 through the modules 12 and 16 of the display device 200. The electronic apparatus 100 may obtain (or identify) structure information of the plurality of display modules based on position information of the plurality of display modules.

With reference to an example 220 of FIG. 2, the display device 200 may include modules 1 to 24. Each of the modules 1 to 4, 5 to 8, 9 to 12, 13 to 16, 17 to 20, 21 to 24, or the like may be vertically connected. With reference to an example 220 different from the example 210, the modules 4, 8, 12, 16, 20, 24 may be connected to the electronic apparatus 100.

The electronic apparatus 100 may obtain a plurality of position information included in the display device 200 through the modules 4, 8, 12, 16, 20, 24 of the display device 200.

The electronic apparatus 100 may obtain position information of the modules 1 to 4 through the module 4. The electronic apparatus 100 may obtain position information of the modules 5 to 8 through the module 8. The electronic apparatus 100 may obtain position information of the modules 9 to 12 through the module 12. The electronic apparatus 100 may obtain position information of the modules 13 to 16 through the module 16. The electronic apparatus 100 may obtain position information of the modules 17 to 20 through the module 20. The electronic apparatus 100 may obtain position information of the modules 21 to 24 through the module 24.

FIG. 3 is a view illustrating examples of devices for providing an image to the display device 200.

With reference to an example 310 of FIG. 3, a user device 300 may be connected to an electronic apparatus 100. At least one of the electronic apparatus 100 or the display device 200 may be controlled through the user device 300. The user device 300 may receive a user input. The user device 300 may transmit an image to the electronic apparatus 100 based on the user input. The electronic apparatus 100 may process and transmit the received image to the display device 200. The display device 200 may display the processed image.

With reference to an example 320 of FIG. 3, a server 400 may be connected to the display device 200. In this case, the server 400 is the electronic apparatus 100. The server 400 may be referred to as an external server. The server 400 may be communicatively connected to at least one module included in the display device 200. The server 400 may transmit the image to the display device 200. The display device 200 may display the received image.

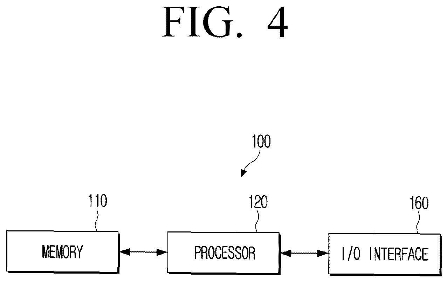

FIG. 4 is a block diagram illustrating a configuration of the electronic apparatus 100.

The electronic apparatus 100 may include at least one of memory 110, at least one processor 120, or an I/O interface 160.

The memory 110 may store instructions and data with respect to various operations performed by the electronic apparatus 100. The memory 110 may store preset resolution. The preset resolution may designate basic resolution provided by the electronic apparatus 100. The preset resolution may be changed by a user setting. The preset resolution may designate a size of an input image.

The I/O interface 160 may be connected to the display device 200. The electronic apparatus 100 and the display device 200 may be mutually connected through the I/O interface 160. According to various embodiments, the electronic apparatus 100 and the display device 200 may be mutually connected through the I/O interface 160 implemented as a plurality of lines.

At least one processor 120 may perform overall control operations of the electronic apparatus 100. The at least one processor 120 may perform a function of controlling overall operations of the electronic apparatus 100.

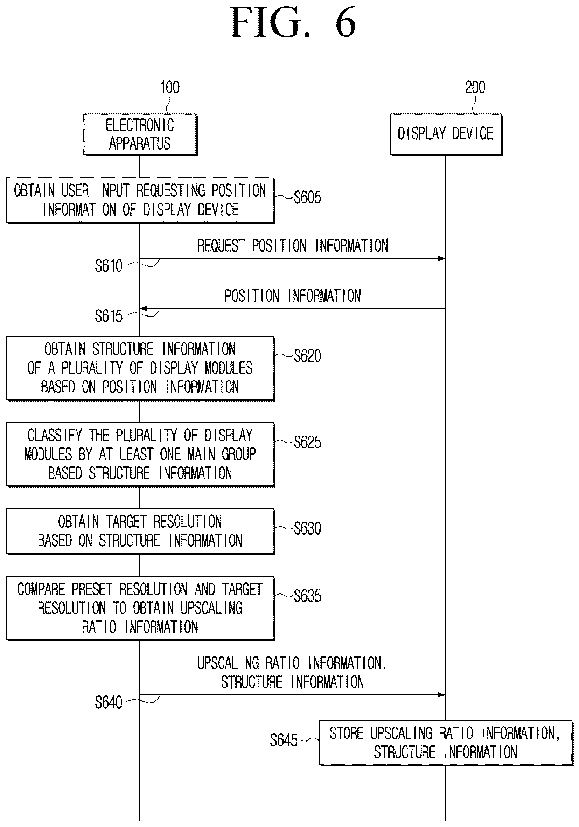

The at least one processor 120 may obtain position information indicating positions of a plurality of display modules, obtain structure information indicating structures of the plurality of display modules, classify the plurality of display modules as at least one main group based on the structure information, obtain target resolution based on the structure information, obtain upscaling ratio information based on the preset resolution and the target resolution, and transfer the structure information and the upscaling ratio information to the at least one main group through the I/O interface 160. The plurality of display modules may be modules which display an image based on the structure information and the upscaling ratio information. Operations related to the above are described in FIG. 6.

The display device 200 may include a plurality of display modules. The display device 200 may obtain position information indicating positions of the plurality of display modules. The display device 200 may transmit the position information to the electronic apparatus 100 through the I/O interface 160.

The at least one processor 120 may receive the position information transmitted by the display device 200 through the I/O interface 160.

The position information may include information indicating a position of each of the plurality of display modules. The position information may include information indicating where each of the plurality of display modules is disposed in the display device 200.

The position information may be information on which identification information of a specific display module and position data of the specific display module are reflected.

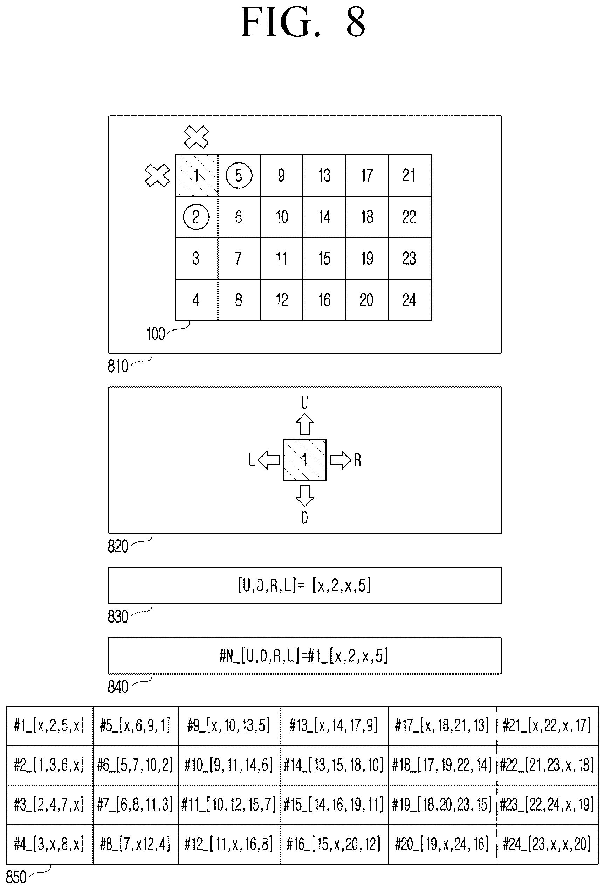

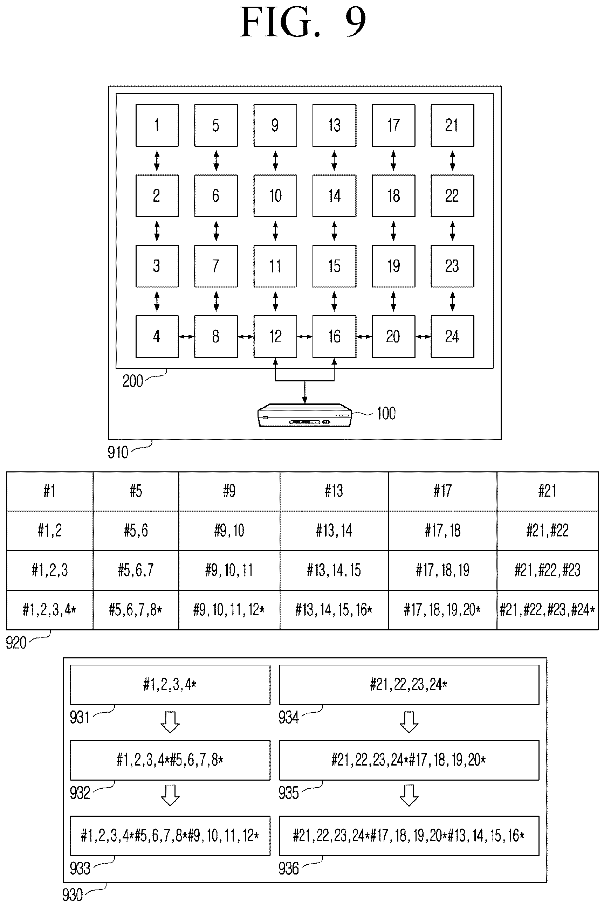

A specific calculation operation related to the position information is described in FIGS. 8 and 9.

The at least one processor 120 may obtain structure information indicating a structure of the plurality of display module based on the position information.

The structure information may include at least one of a position, a sequence, or a shape of the plurality of display modules.

The position may designate at which position the plurality of display modules are disposed. The position may include at least one of a relative position or an absolute position.

The sequence may designate in what sequence the plurality of display modules are disposed.

The shape may designate in what shape the plurality of display modules are disposed. For example, the plurality of display modules may be disposed in a square shape having a ratio of 4:6 (vertical:horizontal).

The position information may designate a position of each of the plurality of display modules. The structure information may designate arrangement of the plurality of display modules. The structure information may be a concept including position information.

The at least one processor 120 may identify target resolution based on structure information. The target resolution may designate resolution to be displayed through the plurality of display modules. The target resolution may be determined based on the structure information designating positions of the plurality of display modules overall.

The target resolution may be referred to as goal resolution, conversion resolution, or the like.

The at least one processor 120 may compare preset resolution stored in the memory 110 and the target resolution to obtain upscaling ratio information. The preset resolution may be resolution capable of being provided by the electronic apparatus 100. The preset resolution may be plural numbers. The preset resolution may be resolution having a specific range.

The electronic apparatus 100 may provide an image to the display device 200 by using the preset resolution. The display device 200 may perform upscaling operations by using upscaling ratio information to provide the received image in the target resolution.

The upscaling ratio information may include a parameter required for the upscaling operations. The upscaling ratio information may be referred to as upscaling information, an upscaling parameter, upscaling expansion ratio information, etc.

The display device 200 may perform downscaling operations. In the aforementioned and after-mentioned description, the upscaling ratio information may be substituted with downscaling ratio information. The scaling ratio information may be described as a concept including the upscaling ratio information and the downscaling ratio information.

The at least one processor 120 may obtain a horizontal scaling ratio by using a horizontal length of the preset resolution and a horizontal length of the target resolution. The at least one processor 120 may obtain a horizontal scaling ratio by performing a division operation of dividing a horizontal length of the target resolution by a horizontal length of the preset resolution.

The at least one processor 120 may obtain a vertical scaling ratio by using a vertical length of the preset resolution and a vertical length of the target resolution. The at least one processor 120 may obtain a vertical scaling ratio by performing a division operation of dividing a vertical length of the target resolution by a vertical length of the preset resolution.

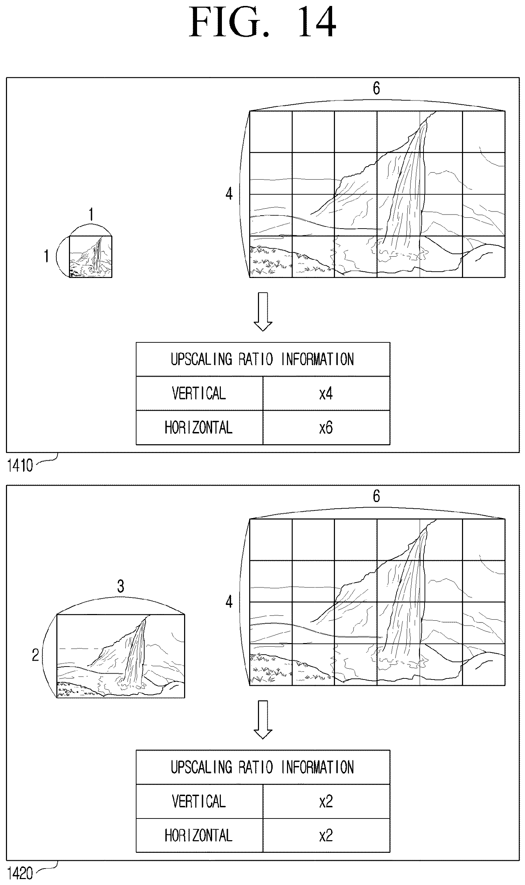

With reference to an example 1410 of FIG. 14, at least one processor 120 may perform a division operation of dividing target resolution (4:6) by preset resolution (1:1) to obtain upscaling ratio information (4:6). The upscaling ratio information may include a scaling magnification.

With reference to an example 1420 of FIG. 14, at least one processor 120 may perform a division operation of dividing target resolution (4:6) by preset resolution (2:3) to obtain upscaling ratio information (2:2). The upscaling ratio information may include a scaling magnification.

The at least one processor 120 may classify a plurality of display modules as at least one main group based on structure information. The at least one main group may be divided based on a preset criterion.

For example, the preset criterion may be determined according to a user setting. The preset criterion may identify the main group as a left side and a right side with reference to a center position in structures of the plurality of display modules.

For example, the preset criterion may be port information of the I/O interface 160. The position information may be received by the electronic apparatus 100 through a specific port of the I/O interface 160.

The at least one processor 120 may identify port information of the I/O interface 160 receiving position information. The at least one processor 120 may identify the main group based on port information and position information. The at least one processor 120, if the port information is different, may classify a display module corresponding to the position information as a different main group. The at least one processor 120 may identify a module corresponding to position information received through the same port as the same main group.

With reference to an example 910 of FIG. 9, position information of first to twelfth display modules may be received by the electronic apparatus 100 through a first port. The at least one processor 120 may identify the first to twelfth display modules corresponding to position information received by the first port as a first main group.

With reference to an example 910 of FIG. 9, position information of thirteenth to twenty-fourth display modules may be received by the electronic apparatus 100 through a second port. The at least one processor 120 may identify the thirteenth to twenty-fourth display modules corresponding to position information received by the second port as a second main group.

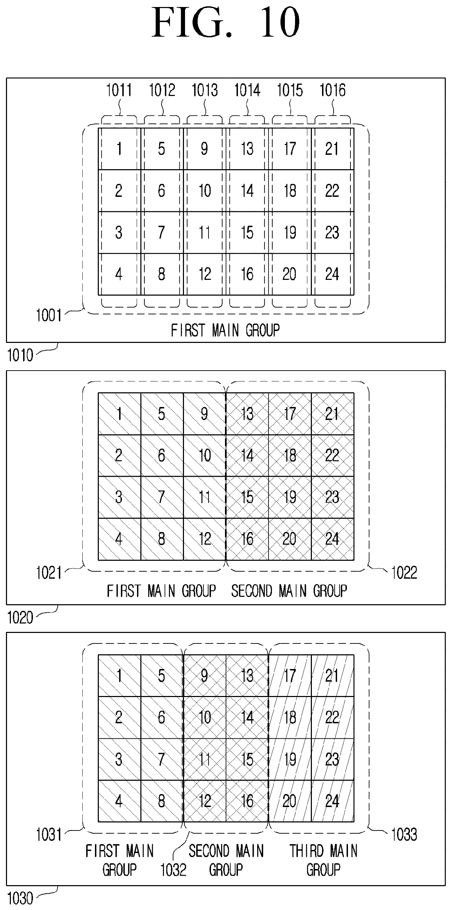

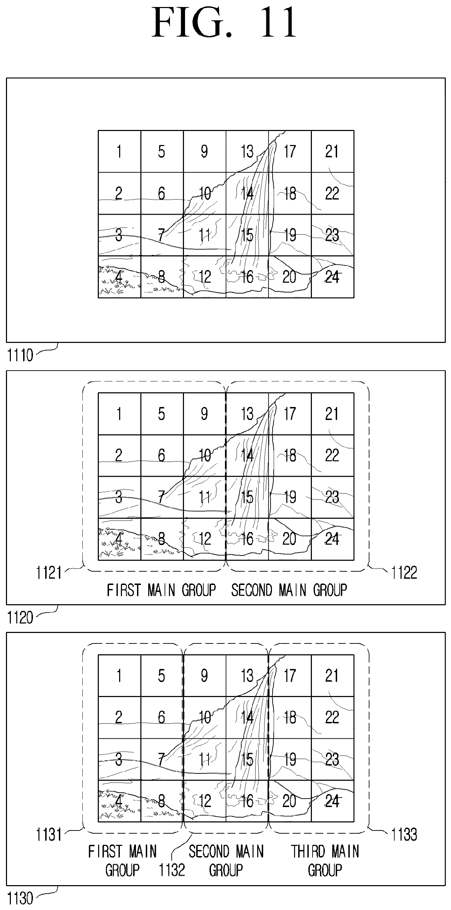

An additional operation of dividing a main module is described in FIG. 10. An operation of providing an image to the divided main module is described in FIG. 11.

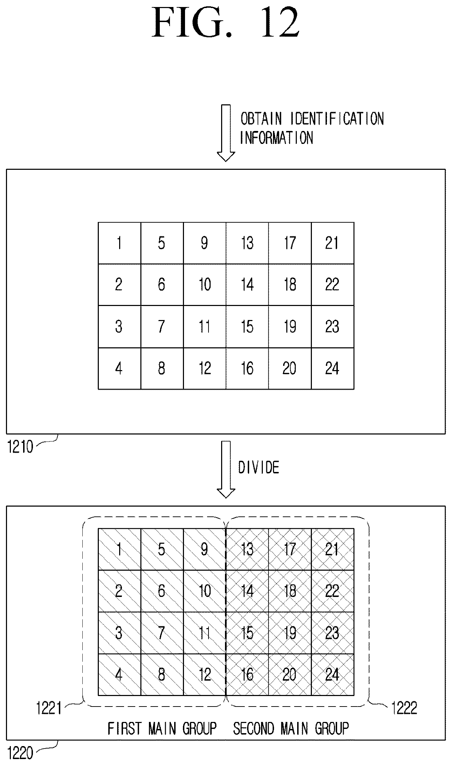

The main module may be divided based on identification information of the plurality of display modules. The identification information may be information for specifying the display module. Operations related to the above are described in FIG. 12.

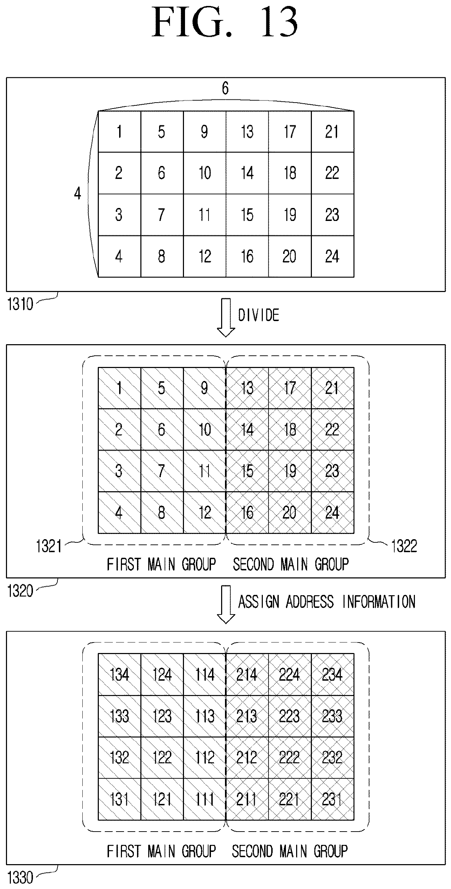

The at least one processor 120 may generate address information for specifying the plurality of display modules after dividing the main module. The address information may be determined based on the main module. Operations related to the above will be described in FIG. 13.

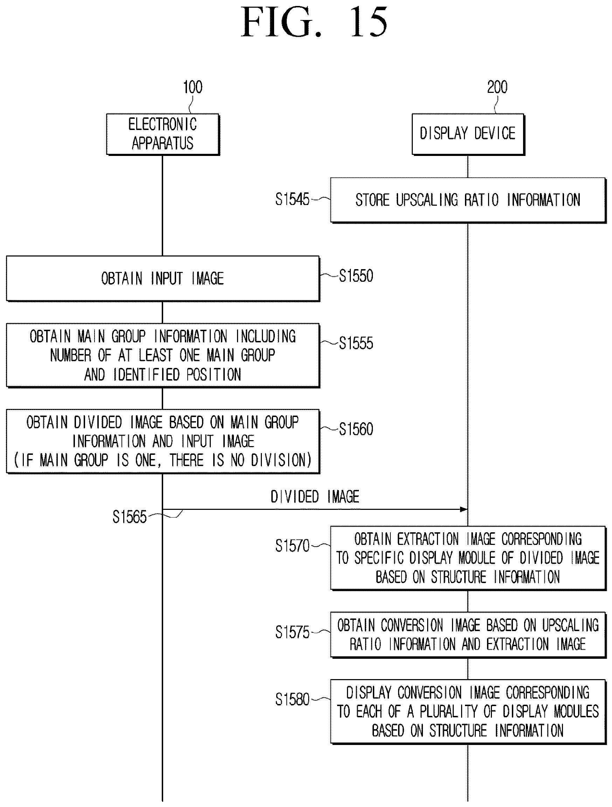

The at least one processor 120 may obtain an input image, obtain main group information including the number of the at least one main group and an area of the at least one main group, obtain a divided image by dividing the input image based on main group information, and transfer the divided image to the display device through the I/O interface 160. Operations related to the above are described in FIG. 15.

The at least one processor 120 may divide and transmit an input image to at least one main group through the I/O interface 160.

The at least one processor 120 may identify the number of main groups. With reference to an example 1020 of FIG. 10, the least one processor 120 may identify the number of main groups as 2.

The at least one processor 120 may identify an area of the main group. The area of the main group may designate an area including a display module included in a specific main group among the entire area on which the plurality of display modules are disposed. The area may be referred to as area information. The area of the main group may be information designating a relative potion. The area of the main group may relatively designate an area occupied by a display module included in a specific main group among the entire area occupied by the display modules. The area of the main group may be referred to as a relative area or relative area information of the main group.

With reference to an example 1020 of FIG. 10, the at least one processor 120 may identify an area corresponding to a first main group 1021 and an area corresponding to a second main group 1022.

The at least one processor 120 may obtain main group information including the number of main groups and an area of the main group. The main group information may designate data having a form that a plurality of information are grouped and stored.

The at least one processor 120 may divide an input image based on the number of main groups and the area of the main group included in the main group information.

The at least one processor 120 may divide the input image by using an area of the main group as many as the number of main groups.

The at least one processor 120 may identify a relative area occupied by a specific main group by using an area of the main group. The at least one processor 120 may divide an input image in consideration of the identified relative area. The divided image may correspond to the main group.

With reference to an example 1020 of FIG. 10, it is assumed that the at least one processor 120 may identify a first main group 1021 and a second main group 1022. An area of the first main group 1021 may be a left half area of the entire area. An area of the second main group 1022 may be a right half area of the entire area.

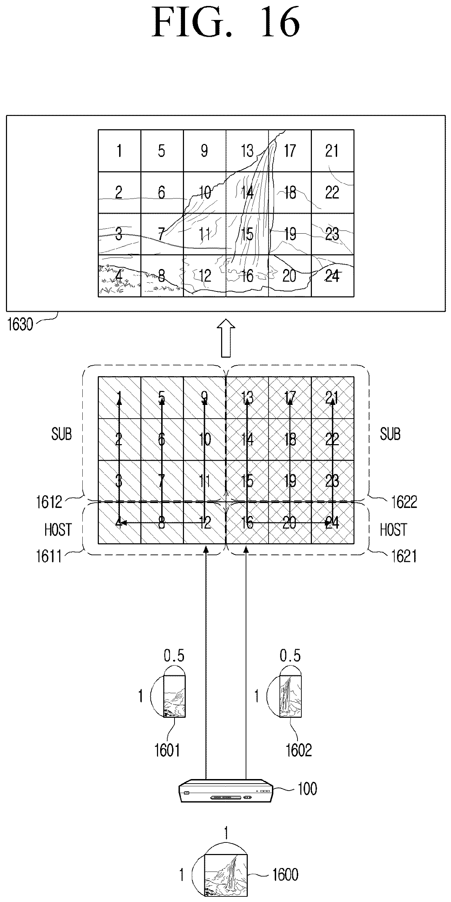

With reference to an example of FIG. 16, it is assumed that an input image is divided based on the main group identified in the example 1020 of FIG. 10. The at least one processor 120 may obtain a first divided image 1601 by separating a left half of the entire area of the input image based on the relative area (a left half) of the first main group 1021. The at least one processor 120 may obtain a second divided image 1602 by separating a left half of the entire area of the input image based on the relative area (a right half) of the second main group 1022.

The at least one processor 120 may transmit the first divided image 1601 to a display module included in the first main group 1021 through the I/O interface 160.

The at least one processor 120 may transmit the second divided image 1602 to a display module included in the second main group 1022 through the I/O interface 160.

Two display modules may be connected to the electronic apparatus 100 through the I/O interface 160. The related example is described in the example 210 of FIG. 2, the example 910 of FIG. 9, the example 1020 of FIG. 10, and FIG. 16. The operations below are described based on FIG. 9 among similar examples.

The at least one processor 120 may receive first position information 933 from a first display module (a twelfth module) connected to the I/O interface 160. The at least one processor 120 may receive second position information 936 from a second display module (a sixteenth module) connected to the I/O interface 160.

The at least one processor 120 may classify at least one display module (first to twelfth modules) identified from the first position information 933 as the first main group 1021. The at least one processor 120 may classify at least one display module (thirteenth to twenty-fourth modules) identified from the second position information 936 as the second main group 1022.

The at least one processor 120 may obtain first structure information corresponding to the first main group 1021 based on the first position information 933. The at least one processor 120 may obtain second structure information corresponding to the second main group 1022 based on the second position information 936.

The at least one processor 120 may transmit upscaling ratio information and the first structure information to the first display module (the twelfth module) through the I/O interface 160. The at least one processor 120 may transmit upscaling ratio information and the second structure information to the second display module (the sixteenth module) through the I/O interface 160.

The at least one processor 120 may obtain an input image 1600.

The at least one processor 120 may divide the input image based on a first area of the first main group 1021 and a second area of the second main group 1022 to obtain the first divided image 1601 and the second divided image 1602. The first divided image 1601 may be a partial image corresponding to a relative area of the first main group 1021. The second divided image 1602 may be a partial image corresponding to a relative area of the second main group 1022.

The at least one processor 120 may transmit the first divided image 1601 to the first display module (the twelfth module) through the I/O interface 160.

The at least one processor 120 may transmit the second divided image 1602 to the second display module (the sixteenth module) through the I/O interface 160.

The first divided image may be displayed by upscaling through at least one display module (the first to twelfth modules) classified as the first main group 1021.

The second divided image may be displayed by upscaling through at least one display module (the thirteenth to twenty-fourth modules) classified as the second main group 1022.

The at least one processor 120 may obtain target resolution based on preset restrictive resolution stored in the memory 110. The preset restrictive resolution may be resolution for restricting a size of resolution of an output image. For example, if a ratio between a vertical length of resolution and a horizontal length of resolution is equal to or greater than a first threshold value or is less than a second threshold value, scaling quality may be lowered or an image which is not proper for a user to watch may be outputted.

The preset restrictive resolution may include resolution in which a ratio between a vertical length and a horizontal length is less than a first threshold value or is equal to or greater than a second threshold value. The preset restrictive resolution may be referred to as resolution information. The preset restrictive resolution may include a plurality of resolution or resolution in a threshold range.

The at least one processor 120 may obtain target module information including a target display module to display an image among the plurality of display modules based on the target resolution.

If the target resolution is determined, the at least one processor 120 may provide an image to the display device 200 based on the target resolution. If the target resolution is under consideration, the image may not be displayed on all of the plurality of display modules included in the display device 200. The at least one processor 120 may identify a display module which displays an image and a display module which does not display an image. The at least one processor 120 may obtain target module information based on structure information and target resolution. The target module information may include information for distinguishing the display module which displays the image from the module which does not display the image.

The target module information may include information about whether to display the image on each of the plurality of display modules. The information about whether to display the image may designate whether the display module is the module which displays the image or the module which does not display the image.

As an example, the image may be displayed on all of the plurality of display modules.

As an example, the image may be displayed on some display modules of the plurality of display modules.

The at least one processor 120 may transmit the structure information, the upscaling ratio information, and the target module information to the display device through the I/O interface 160.

The target resolution may be first target resolution, and the upscaling ratio information may be first upscaling ratio information. The at least one processor 120, if positions of the plurality of display modules included in the display device are changed, may obtain new structure information indicating the positions of the plurality of changed display modules.

The at least one processor 120 may obtain second target resolution based on the new structure information. The at least one processor 120 may obtain second upscaling ratio information based on the preset resolution and the second target resolution.

The at least one processor 120 may transmit the second structure information and the second upscaling ratio information to the display device 200 through the I/O interface 160.

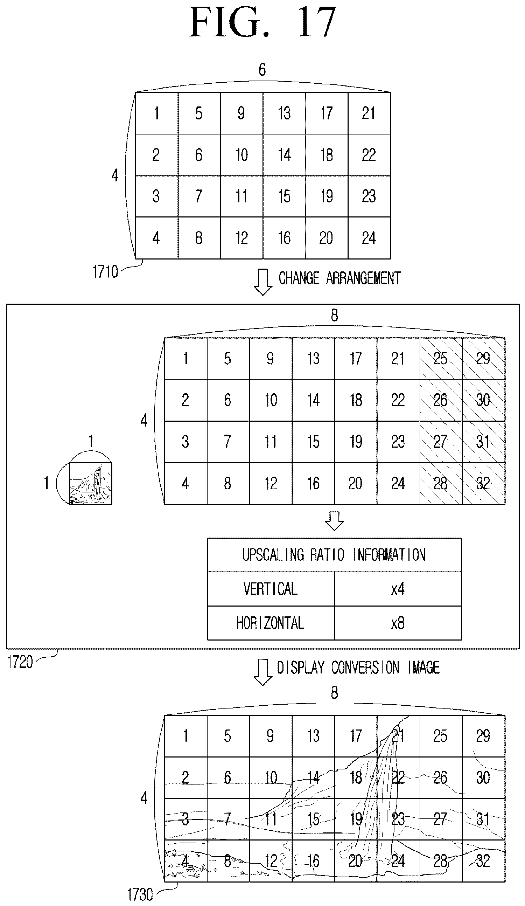

The example in which the structure is changed is described in FIGS. 17, 18, and 19.

The electronic apparatus 100 determines a structure of the plurality of display modules and provides information required for scaling operations to the display device 200. The electronic apparatus 100 does not directly perform an image scaling operation but the display device 200 may perform the image scaling operation. If the display device 200 performs the image scaling operation, a processing speed and processing efficiency may increase. This is because an amount of operations to be processed is distributed.

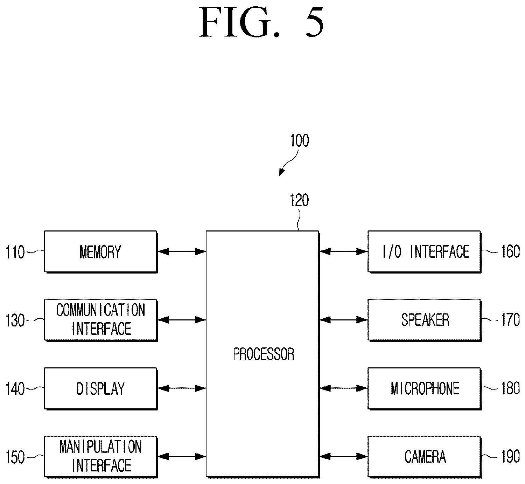

As aforementioned, the display device 200 is connected to the electronic apparatus 100 through the I/O interface 160. According to various embodiments, the display device 200 may be connected to the electronic apparatus 100 through a communication interface 130 described in FIG. 5 instead of the I/O interface 160.

FIG. 5 is a block diagram illustrating a detailed configuration of the electronic apparatus of FIG. 4.

FIG. 5 is a block diagram illustrating a detained configuration of the electronic apparatus 100 of FIG. 4.

With reference to FIG. 5, the electronic apparatus 100 may include at least one of memory 110, at least one processor 120, a communication interface 130, a display 140, a manipulation interface 150, an I/O interface 160, a speaker 170, a microphone 180, or a camera 190.

The memory 110 may be implemented as internal memory such as ROM (e.g. electrically erasable programmable read-only memory (EEPROM)) or RAM included in the at least one processor 120 or may be implemented as memory separate from the at least one processor 120. The memory 110 may be implemented as memory embedded in the electronic apparatus 100 according to a use for data storage or may be implemented as memory detachable from the electronic apparatus 100. For example, data for driving the electronic apparatus 100 is stored in memory embedded in the electronic apparatus 100 and data for an extension function of the electronic apparatus 100 may be stored in memory detachable to the electronic apparatus 100.

Memory embedded in the electronic apparatus 100 may be implemented as at least one of volatile memory (e.g. dynamic RAM (DRAM), static RAM (SRAM), or synchronous dynamic RAM (SDRAM), etc.) or non-volatile memory (e.g. one time programmable ROM (OTPROM), programmable ROM (PROM), erasable and programmable ROM (EPROM), electrically erasable and programmable ROM (EEPROM), mask ROM, flash ROM, flash memory (e.g. NAND flash, NOR flash, etc.), a hard drive, or a solid state drive (SSD), and memory detachable from the electronic apparatus 100 may be implemented as a memory card (e.g. a compact flash (CF) card, a secure digital (SD) card, a micro secure digital (Micro-SD) card, a mini secure digital (Mini-SD) card, an extreme digital (xD) card, a multi-media card (MMC), etc.), external memory connectible to a USB port (e.g. USB memory), or the like.

The memory 110 may store at least one instruction. The at least one processor 120 may perform various operations based on the instructions stored in the memory 110.

At least one processor 120 may be implemented as a digital signal processor (DSP) processing a digital signal, a microprocessor, or a time controller (TCON). Meanwhile, the at least one processor is not limited thereto and may include one or more of a central processing unit (CPU), a micro controller unit (MCU), a micro processing unit (MPU), a controller, an application processor (AP), a graphics-processing unit (GPU) or a communication processor (CP), and an advanced reduced instruction set computer (RISC) machine (ARM) processor or may be defined based on the relevant terms. The at least one processor 120 may be implemented as a system on chip (SoC) on which processing algorithm is embedded or a large scale integration (LSI) and may be implemented as a field programmable gate array (FPGA). The at least one processor 120 may perform various functions by executing computer executable instructions stored in the memory.

The communication interface 130 is a configuration performing communication with various types of external devices according to various types of communication methods. The communication device 130 may include a wireless communication module or a wired communication module. Each communication module may be implemented in a form of at least one hardware chip.

The wireless communication module may be a module which communicates with an external device wirelessly. For example, the wireless communication module may include at least one module of a Wi-Fi module, a Bluetooth module, an infrared communication module, or other communication modules.

The Wi-Fi module and the Bluetooth module may perform communication in a Wi-Fi method and a Bluetooth method, respectively. In case of using the Wi-Fi module or the Bluetooth module, the module may receive and transmit various connection information such as a service set identifier (SSID) and a session key in advance, connect communication by using the connection information, and then receive and transmit various information.

The infrared communication module may perform communication based on an infrared data association (IrDA) technology which transmits data wirelessly in a short distance by using infrared light between visible light and a millimeter wave.

The other communication modules may include at least one communication chip performing communication according to various wireless communication standards such as Zigbee, a 3rd generation (3G), a 3rd generation partnership project (3GPP), long term evolution (LTE), LTE Advanced (LTE-A), a 4th generation (4G), and a 5th generation (5G).

The wired communication module may be a module which communicates with an external device wiredly. For example, the wired communication module may include at least one of a Local Area Network (LAN) module, an Ethernet module, a pair cable, a coaxial cable, a fiber optic cable, or an Ultra Wide-Band (UWB) module.

According to various embodiments, the communication interface 130 may use the same communication module (e.g. a Wi-Fi module) to communicate with an external device such as a remote control device and an external server.

According to various embodiments, the communication interface 130 may use a different communication module to communicate with the external device such as the remote control device and the external server. For example, the communication interface 130 may use at least one of the Ethernet module or the Wi-Fi module to communicate with the external server and may use a Bluetooth module to communicate with the external device such as the remote control device. Meanwhile, it is merely an example, the communication interface 130 may use at least one communication module of various communication modules if it communicates with a plurality of external devices or external servers.

The display 140 may be implemented as a display having various forms such as a liquid crystal display (LCD), an organic light emitting diode (OLED) display, and a plasma display panel (PDP). The display 140 may include a driving circuit which may be implemented in a form such as an amorphous silicon thin film transistor (a-si TFT), a low temperature poly silicon (LTPS) TFT, or an organic TFT (OTFT), a backlight unit, or the like therein. The display 140 may be implemented as a touch screen coupled to a touch sensor, a flexible display, a three-dimensional display (a 3D display), or the like. According to an embodiment of the disclosure, the display 140 may include not only a display panel outputting an image but also a bezel housing the display panel. In particular, according to an embodiment of the disclosure, the bezel may include a touch sensor for sensing a user interaction.

The manipulation interface 150 may be implemented as a device such as a button, a touch pad, a mouse, and a keyboard or may be also implemented as a touch screen capable of performing the display function together with a manipulation input function. The button may be various types of buttons such as a mechanical button, a touch pad, or a wheel formed at any area such as a front part, a side part, a rear part, or the like of an appearance of a body of the electronic apparatus 100.

The I/O interface 160 may be any one interface of a High Definition Multimedia Interface (HDMI), a Mobile High-Definition Link (MHL), a Universal Serial Bus (USB), a Display Port (DP), a Thunderbolt, a Video Graphics Array (VGA) port, a RGB port, a D-subminiature (D-SUB) connector, or a Digital Visual Interface (DVI). The I/O interface 160 may input and output at least one of an audio signal or a video signal. According to an embodiment, the I/O interface 160 may include a port which inputs and outputs only the audio signal and a port which inputs and outputs only the video signal as separate ports or may be implemented as one port which inputs and outputs all of the audio signal and the video signals. The electronic apparatus 100 may transmit at least one of the audio signal or the video signal to the external device (e.g. an external display device or an external speaker) through the I/O interface 160. The output port included in the I/O interface 160 may be connected to the external device, and the electronic apparatus 100 may transmit at least one of the audio signal or the video signal to the external device through an output port.

The I/O interface 160 may be connected to a communication interface. The I/O interface 160 may transmit information received from the external device to the communication interface or may transmit information received the communication interface to the external device.

The speaker 170 is a component outputting not only various audio data but also various alarm sound, voice messages, or the like.

The microphone 180 is a component for receiving and converting a user voice or other sound to audio data. The microphone 180 may receive the user voice in an active state. For example, the mike 180 may be formed as an integral type as being integrated into an upper side or in a front direction or a side direction of the electronic apparatus 100, etc. The microphone 180 may include various components such as a microphone collecting a user voice in an analog form, an amplifier circuit amplifying the collected user voice, an A/D conversion circuit sampling and converting the amplified user voice to a digital signal, and a filter circuit removing a noise component from the converted digital signal.

The camera 190 is a component for photographing a subject to generate a photographed image, wherein the photographed image is a concept including all of a moving image and a static image. The camera 190 may obtain an image about at least one external device and may be implemented as a camera, a lens, an infrared light sensor, or the like.

The camera 190 may include a lens and an image sensor. A type of lens may be a general purpose lens, a wide angle lens, a zoom lens, or the like and may be determined according to a type, a characteristic, or a usage environment of the electronic apparatus 100, etc. As the image sensor, a Complementary Metal Oxide Semiconductor (CMOS), a Charge Coupled Device (CCD), or the like may be used.

FIG. 6 is a view illustrating an operation of obtaining structure information and upscaling ratio information.

With reference to FIG. 6, the electronic apparatus 100 may obtain a user input requesting position information of the display device 200 (S605). The position information may be information indicating a position of a plurality of display modules included in the display device 200.

The electronic apparatus 100 may request the display device 200 for position information. The electronic apparatus 100 may transmit a signal requesting position information to the display device 200 (S610).

The communication device 200 may receive the request signal from the electronic apparatus 100. The display device 200 may transmit the position information to the electronic apparatus 100 in response to the request signal (S615). The display device 200 may include a plurality of display modules. The module may be referred to as a display module.

The display device 200 may transmit position information about each of the plurality of display modules to the electronic apparatus 100.

The electronic apparatus 100 may receive the position information from the display device 200. The electronic apparatus 100 may obtain structure information based on the position information (S620). The structure information may be information indicating the structure of the plurality of display modules included in the display device 200.

The electronic apparatus 100 may classify a plurality of display modules as at least one main group based on the structure information (S625). The step S625 may be omitted according to an embodiment.

The electronic apparatus 100 may obtain target resolution based on the structure information (S630). The target resolution may be referred to as resolution corresponding to structure information.

The electronic apparatus 100 may compare preset resolution and target resolution to obtain upscaling ratio information.

The electronic apparatus 100 may transmit structure information and/or upscaling ratio information to the display device 200 (S640).

The display device 200 may receive structure information and/or upscaling ratio information from the electronic apparatus 100. The electronic apparatus 200 may store the structure information and/or upscaling ratio information (S645).

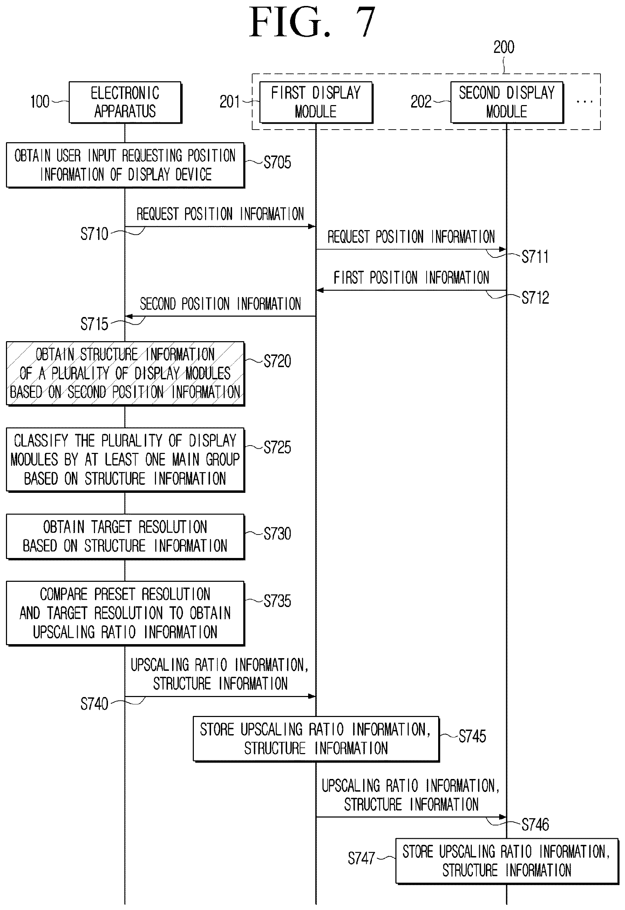

FIG. 7 is a view illustrating a detailed operation of obtaining structure information and upscaling ratio information.

Steps S705, S710, S715, S720, S725, S730, S735, S740, S745 of FIG. 7 may correspond to the steps S605, S610, S615, S620, S625, S630, S635, S640, S645 of FIG. 6. The overlapped description is omitted.

The electronic apparatus 100, after obtaining a user input requesting position information of the display device 200, may transmit a position information request to a first display module 201 of the display device 200 (S710).

As an example, the position information request may be transmitted up to a module positioned at the farthest distal end of a plurality of connected display modules. The position information may be initially generated from the display module at the farthest distal end, be accumulated, and be transmitted. The example related to the above is described in FIG. 9.

The first display module 201 may receive the position information request from the electronic apparatus 100. The first display module 201 may transmit the position information request to a second display module 202 (S711).

The second display module 202 may receive the position information request from the first display module 201. The second display module 202 may transmit the first position information to a first display module 201 (S712). The first position information may include information indicating a position of the second display module 202.

The first display module 201 may receive the first position information from the second display module 202. The first display module 201, if receiving the first position information, may add information indicating a position of the first display module 201 to the first position information to obtain second position information. The second position information may include all of a position of the first display module 201 and a position of the second display module 202. The second position information may be referred to as accumulated position information. Detailed operations related to the above are described in FIG. 9.

The first display module 201 may transmit the second position information to the electronic apparatus 100 (S715). The electronic apparatus 100 may receive the second position information from the first display device 201. The electronic apparatus 100 may obtain structure information of the plurality of display modules based on the second position information (S720).

The electronic apparatus 100, if obtaining upscaling ratio information (S735), may transmit structure information and/or upscaling ratio information to the first display device 201 (S740).

The first display module 201 may receive structure information and/or upscaling ratio information from the electronic apparatus 100. The first display module 201 may store the structure information and/or the upscaling ratio information (S745).

After the operation of storing, the first display module 201 may transmit the structure information and/or the upscaling ratio information to the second display module 202 (S746). The second display module 202 may receive the structure information and/or the upscaling ratio information from the first display module 201. The second display module 202 may store the structure information and/or the upscaling ratio information (S747).

FIG. 8 is a view illustrating structure information obtained by identifying a surrounding module.

With reference to an example 810 of FIG. 8, the display device 200 may include modules 1 to 24. The display device 200 may obtain position information corresponding to the modules 1 to 24. The display device 200 may transmit the position information to the electronic apparatus 100.

With reference to an example 820 of FIG. 8, the display device 200 may identify a module adjacent to each of upper, lower, left, and right sides of a module.

With reference to an example 830 of FIG. 8, the display device 200 may obtain position information of a preset format (U, D, R, L). As an example, the position information of the first module may be [x,2,x,5].

With reference to an example 840 of FIG. 8, the display device 200 may obtain position information of a preset format (#N_[U,D,R,L]). As an example, the position information of the first module may be #1_[x,2,x,5].

With reference to a table 850 of FIG. 8, the electronic apparatus 100 may obtain structure information about a plurality of display modules. The display device 200 may transmit position information indicating a position about each of the plurality of display modules to the electronic apparatus 100. The electronic apparatus 100 may analyze position information transmitted by the display device 200 to obtain structure information.

FIG. 9 is a view illustrating structure information obtained by using a connection sequence.

An example 910 of FIG. 9 may correspond to the example 210 of FIG. 2. The overlapped description is omitted.

The display device 200 may generate position information about the plurality of display modules. The display device 200 may generate position information with reference to a vertical direction. The display device 200 may control the plurality of display modules such that an operation of generating the position information starts at a display module (e.g. modules 1, 5, 9, 13, 17, 21) positioned at the top in the vertical direction.

According to an embodiment, the display device 200 may generate the position information with reference to a vertical direction. The display device 200 may control a plurality of display modules to generate position information from the display module positioned at the top in the vertical direction. The display device 200 may transmit a control command (or a control signal) for generating position information to a display module (e.g. modules 1, 5, 9, 13, 17, 21) positioned at the top in the vertical direction. The display device 200 may identify whether every module is connected to an additional display module in an upward direction in a vertical direction. If it is identified that the module is not connected to the additional display module in the upward direction, the display device 200 may determine that the identified display module is a module which is positioned at the top in the vertical direction.

According to an embodiment, the display device 200 may generate position information based on a connection method and a connection position. The display device 200 may control a plurality of display modules to generate position information from a display module (e.g. modules 1, 5, 9, 13, 17, 21) connected to the farthest distal end of the plurality of display modules connected in series. The display device 200 may transmit the control command (or control signal) for generating position information to a display module (e.g. modules 1, 5, 9, 13, 17, 21) connected to the farthest distal end of the plurality of display modules. The display device 200 may identify whether every module is connected to an additional display module. If it is identified that the module is not connected to the additional display module, the display device 200 may determine that the identified display module is a module which is connected at the farthest distal end of the plurality of display modules connected in series.

In the example 910, the position information may be initially generated from the modules 1, 5, 9, 13, 17, 21. Further, the position information is accumulated and updated in a direction of display modules connected downward in the vertical direction (or in a connected display module direction).

A first module may transmit first position information including first identification information to a second module. The second module may generate first position information based on first identification information. The first identification information may be identification information of the first module. The first position information may be information for indicating a position of the first module. For example, the first position information may be #1.

The second module may transmit second position information including second identification information to a third module. The second module may generate first position information and second position information based on second identification information. The second identification information may be identification information of the second module. The second position information may be information for indicating a position of the first module and a position of the second module. For example, the second position information may be #1, 2. The second position information may be information indicating all of positions of the first module and the second module. The second position information may be accumulated position information.

The third module may transmit third position information including third identification information to a fourth module. The third module may generate the second position information and the third position information based on the third identification information. The third identification information may be identification information of the third module. The third position information may be information for indicating a position of the first module, a position of the second module, and a position of the third module. For example, the third position information may be #1, 2, 3. The third position information may be information indicating all of positions of the first module, the second module, and the third module. The third position information may be accumulated position information.

A fourth module may transmit fourth position information including fourth identification information to a fourth module. An eighth module may generate the third position information and the fourth position information based on fourth identification information. The fourth identification information may be identification information of the fourth module. The fourth position information may be information for indicating a position of the first module, a position of the second module, a position of the third module, and a position of the fourth module. For example, the fourth position information may be #1, 2, 3, 4. The fourth position information may be information indicating all of positions of the first module, the second module, the third module, and the fourth module. The fourth position information may be accumulated position information.

The aforementioned description describes only a process of generating the fourth position information indicating positions of the first to fourth modules. The above may be identically applied to a method indicating positions of the other modules.

The table 920 may show position information generated from each of the plurality of display modules.

As an example, the display device 200, if initially generating position information, may add a first sign (e.g. #), and if there is no additional display module in downward direction in the vertical direction any more, the display device may add a second sign (e.g. *).

As an example, the display device 200, if initially generating position information, may add a first sign (e.g. #), and if generating position information from a display module of a different level in a series connection method, the display device may add a second sign (e.g. *).

The modules 1,2,3,5,6,7,9,10,11,13,14,15,17,18,19,21,22,23 may be in a first level. The modules 4, 8, 12, 16, 20, 24 may be in a second level.

As an example, a level of each of the plurality of display modules may be set by a user.

As an example, a level of each of the plurality of display modules may be automatically set. A level of each of the plurality of display modules may be determined according to the number or a direction of the connected display modules.

If a specific display module is not connected to an additional display module in a horizontal direction, the display device 200 may determine the specific display as a first level.

If the number of display modules connected to the specific display module is less than 3 and the specific display module is not connected to a display module in a horizontal direction, the display device 200 may determine the specific display as the first level.

If a specific display module is connected to an additional display module in a horizontal direction, the display device 200 may determine the specific display as a second level.

If the number of display modules connected to the specific display module is 3 or more or the specific display module is connected to a display module in a horizontal direction, the display device 200 may determine the specific display as the second level.

An example 930 may show a calculation process of accumulating position information. Position information 931 may be position information generated from a fourth module. The position information 931 may indicate positions of first to fourth modules.

Position information 932 may be position information generated from an eighth module. The position information 932 may indicate positions of first to eighth modules.

Position information 933 may be position information generated from a twelfth module. The position information 933 may indicate positions of first to twelfth modules.

The twelfth module may transmit the position information 933 to the electronic apparatus 100.

Position information 934 may be position information generated from a twenty-fourth module. The position information 934 may indicate positions of twenty-first to twenty-fourth modules.

Position information 935 may be position information generated from a twentieth module. The position information 935 may indicate positions of seventeenth to twentieth modules.

Position information 936 may be position information generated from a sixteenth module. The position information 936 may indicate positions of thirteenth to sixteenth modules.

The sixteenth module may transmit the position information 936 to the electronic apparatus 100.

The specific display module may generate one position information by combining two position information. For example, the eighth module may receive position information (#1, 2, 3, 4*) from the fourth module. The eighth module may obtain position information (#5,6,7,8*) generated by itself. The eighth module may obtain one position information (#1, 2, 3, 4*#5, 6, 7, 8*) by combining position information (#1, 2, 3, 4*) and position information (#5,6,7,8*).

In the operation of combining, subordinated priority may be given to the position information generated by itself. The specific display module may give priority to position information received from other display modules. To give priority may include an operation that a code or data indicating position information is forward disposed in a sequence.

In the example of FIG. 9, the electronic apparatus 100 may identify at least one main group based on position information and obtain target resolution.

FIG. 10 is a view illustrating examples of main groups.

With reference to FIG. 10, the electronic apparatus 100 may generate position information from a plurality of display modules included in the display device 200. The position information may be plural numbers. The position information may be information indicating a position of each of a plurality of display modules as shown the table 850 of FIG. 8. The position information may be accumulated position information as shown in the example 930 of FIG. 9.

The electronic apparatus 100 may obtain (or generate) structure information based on position information indicating positions of the plurality of display modules. The structure information may be information indicating positions and/or structures of the plurality of display modules. The position information may be partial information indicating a position of each or at least some of the plurality of display modules. The structure information may be information indicating positions of all of the plurality of display modules.

The electronic apparatus 100 may classify a plurality of display modules as at least one main group.

An example 1010 may present an operation of determining one main group 1001. The electronic apparatus 100 may classify a plurality of display modules as one main group 1001 based on the structure information. The electronic apparatus 100 may determine a support group with reference to a vertical direction. If a connection direction is a vertical direction, the electronic apparatus 100 may be classified as the same support group.

First to fourth modules may be classified as a first support group 1011.

Fifth to eighth modules may be classified as a second support group 1012.

Ninth to twelfth modules may be classified as a third support group 1013.

Thirteenth to sixteenth modules may be classified as a fourth support group 1014.

Seventeenth to twentieth modules may be classified as a fifth support group 1015.

Twenty-first to twenty-fourth modules may be classified as a sixth support group 1016.

In the example 910 of FIG. 9, the electronic apparatus 100 may determine a support group based on a criterion of a first sign (e.g. #) and a second sign (e.g. *). The electronic apparatus 100 may classify modules which are present between the first sign (e.g. #) and the second sign (e.g. *) as one support group. The criterion for identifying the support group may be identically applied to the examples 1020, 1030. The overlapped description is omitted.

The example 1020 may present an operation of determining two main groups. The electronic apparatus 100 may classify the plurality of display modules by two main groups based on structure information.

As an example, the electronic apparatus 100 may determine the number of main groups per received position information. For example, in the example 910 of FIG. 9, the electronic apparatus 100 may receive the first position information from the twelfth module and may receive second position information from the sixteenth module. The electronic apparatus 100 may determine a display module included in the first position information as a first main group 1021 and may determine a display module included in the second position information as a second main group 2022.

As an example, the electronic apparatus 100 may determine a plurality of display modules by two main groups based on a preset classification method (e.g. a left side and a right side).

The example 1030 may present an operation of determining three main groups 1031, 1032, 1033. The electronic apparatus 100 may classify a plurality of display modules as three main groups 1031, 1032, 1033 based on structure information.

According to various embodiments, the electronic apparatus 100 may classify the plurality of display modules as a plurality of main groups. The number of main group may be changed depending on a user setting or a criterion.

FIG. 11 is a view illustrating examples of images displayed on the display device.

The electronic apparatus 100 may divide an image based on the number of main groups.

An example 1110 of FIG. 11 may present an operation of displaying an image in the example 1010 of FIG. 10. The electronic apparatus 100 may provide one image to the display device 200. If the number of main groups is one, the electronic apparatus 100 may not divide the image but provide the image to the display device 200.

An example 1120 of FIG. 11 may present an operation of displaying an image in the example 1020 of FIG. 10. The electronic apparatus 100 may divide an image into the number of main groups (two). Based on the division result, the electronic apparatus 100 may obtain a first divided image and a second divided image. The electronic apparatus 100 may provide the divided image to the display device 200. The electronic apparatus 100 may provide the first divided image to a first main group 1121 and provide the second divided image to a second main group 1122.

An example 1130 of FIG. 11 may present an operation of displaying an image in the example 1030 of FIG. 10. The electronic apparatus 100 may divide an image into the number of main groups (three). The electronic apparatus 100 may provide the divided image to the display device 200. Based on the division result, the electronic apparatus 100 may obtain a first divided image, a second divided image, and a third divided image. The electronic apparatus 100 may provide the first divided image to the first main group 1131 and provide the second divided image to the second main group 1132 and provide the third divided image to a third main group 1133.

FIG. 12 is a view illustrating an operation of dividing the image into main groups.

With reference to an example 1210 of FIG. 12, the display device 200 may include first to twenty-fourth display modules. The display device 200 may obtain identification information of each of the plurality of display modules. The identification information of each module may be 1 to 24. The identification information may include information which may be specified. The identification information may include at least one of a unique number or a model number of the display module.

The identification information may be included in position information. The description related to the above is described in FIGS. 8 and 9.

With reference to an example 1220 of FIG. 12, the electronic apparatus 100 may identify a first main group 1221 and a second main group 1222 based on identification information included in the position information. The electronic apparatus 100 may group identification information of each of first to twelfth display modules as the first main group 1221. The electronic apparatus 100 may group identification information of each of thirteenth to twenty-fourth display modules as the second main group 1222.

FIG. 13 is a view illustrating an operation of assigning address information to the main group.

With reference to an example 1310 of FIG. 13, the electronic apparatus 100 may receive information indicating positions of 24 display modules from the display device 200.

In an example 1320 of FIG. 13, the electronic apparatus 100 may determine at least one main group based on position information. The electronic apparatus 100 may divide (or segment) the plurality of display modules into two main groups. The electronic apparatus 100 may identify a first main group 1321 and a second main group 1322 based on position information.

With reference to an example 1330 of FIG. 13, the electronic apparatus 100 may assign new address information based on the divided first main group and second main group. The address information may be information indicating a position of a specific display module. The address information may be different from unique identification information described in FIG. 12. The address information may be information newly generated based on the main group.

The plurality of display modules included in the display device 200 may be specified based on new address information generated by the electronic apparatus 100. For example, address information of the first module may be 134. The description of address information of other modules is omitted.

FIG. 14 is a view illustrating an operation of obtaining upscaling ratio information.

The electronic apparatus 100 may identify (or obtain) target resolution based on structure information. The electronic apparatus 100 may determine target resolution of an image to be provided to structure information. This is because a size of the image to be displayed may be varied according to the structure information. The electronic apparatus 100 may obtain upscaling ratio information based on preset resolution and target resolution. The resolution may designate a horizontal to vertical ratio.

With reference to an example 1410 of FIG. 14, it is assumed that preset resolution is 1:1(vertical:horizontal). The electronic apparatus 100 may determine a size of the image to be displayed by the display device 200 based on structure information. The electronic apparatus 100 may determine target resolution based on the structure information. The electronic apparatus 100 may obtain target resolution of 4:6 (vertical:horizontal).

"Vertical:horizontal" representing resolution may include a concept of an absolute length. For example, resolution of 1:1 and resolution of 2:2 may have a concept of representing a ratio and thus, may mean the same ratio. However, the resolution of 1:1 and the resolution of 2:2 may have a concept of a length and thus, may designate a different length. The above may mean that a length in the resolution of 2:2 is longer that a length in the resolution of 1:1.

The electronic apparatus 100 may obtain upscaling ratio information (4:6) based on preset resolution (1:1) and target resolution (4:6). The upscaling ratio information may designate a coefficient by which each of the plurality of display modules scales an image.

The upscaling ratio information (4:6) may include a vertical conversion ratio (x4) and/or horizontal conversion ratio (x6).

The image may be converted based on the upscaling ratio information (4:6). The image may be 4 times expanded with respect to the horizontal and may be 6 times expanded with respect to the vertical.

With reference to an example 1420 of FIG. 14, it is assumed that preset resolution is 2:3 (vertical:horizontal). The electronic apparatus 100 may determine a size of the image to be displayed by the display device 200 based on structure information. The electronic apparatus 100 may determine target resolution based on the structure information. The electronic apparatus 100 may obtain target resolution of 4:6 (vertical:horizontal).

The electronic apparatus 100 may obtain upscaling ratio information (2:2) based on preset resolution (2:3) and target resolution (4:6). The upscaling ratio information may designate a coefficient by which each of the plurality of display modules scales an image.

The upscaling ratio information (2:2) may include vertical conversion ratio (x2) and/or horizontal conversion ratio (x2) information.

The image may be converted based on the upscaling ratio information (2:2). The image may be 2 times expanded with respect to the horizontal and may be 2 times expanded with respect to the vertical.

FIG. 15 is a view illustrating an operation of displaying a conversion image by using the upscaling ratio information.

With reference to FIG. 15, the display device 200 may store upscaling ratio information (S1545). The operations of FIGS. 6 to 7 may be applied to the previous step related to the above.

The electronic apparatus 100 may obtain an input image (S1550).

The electronic apparatus 100 may identify the number of at least one main group and an area of the at least one main group. The electronic apparatus 100 may obtain main group information including the number of at least one main group and the area of the at least one main group (S1555).

The area may designate a relative position of the specific main group. For example, in the example 1020 of FIG. 10, an area of the first main group 1021 may be on the left, and an area of the second main group 1022 may be on the right.

The area may designate an absolute position of the specific main group. For example, in the example 1020 of FIG. 10, the area of the first main group 1021 may be a first area (x1,y1~x12,y12), and the area of the second main group 1022 may be a second area (x13,y13~x24,y24).

The description of operations of dividing and providing an image based on the main group is described in FIGS. 10 and 11.

The electronic apparatus 100 may divide an input image based on the number of main groups and an area of the main group (e.g. left, right). The electronic apparatus 100 may divide the input image into the number of main groups (e.g. two). The electronic apparatus 100 may divide the input image based on the area of the main group (e.g. left, right).

The electronic apparatus 100 may obtain a divided image based on the main group information and the input image (S1560). If the main group is one as shown in the example 1010 of FIG. 10 and the example 1110 of FIG. 11, the input image may not be divided.

The electronic apparatus 100 may transmit the divided image to the display device 200 (S1565). The divided image may be a plurality of divided images.

If the division operation is not performed, the step S1656 may be described as transmitting the input image. Hereinafter, the overlapped description is omitted.

The display device 200 may receive the divided image from the electronic apparatus 100. The display device 200 may obtain an extraction image based on the upscaling ratio information and the divided image (S1570).

Each of the plurality of display modules may identify its position through structure information. Each of the plurality of display modules may obtain an extraction image corresponding to its position. The divided image may be an image about at least one display module corresponding to the main group. A specific display module may extract a partial image to be displayed by itself. The extracted partial image may be referred to as an extraction image. A specific display module may extract an image area corresponding to its position. The extraction image may include an area to be displayed by the specific display module.

The specific display module may obtain an extraction image including information about a partial area to be displayed by the specific display module of the entire area of the divided image based on structure information.

The display device 200 may obtain a conversion image by scaling the extraction image based on the upscaling ratio information (S1575). The scaling may include an operation of changing resolution (or a size) of the input image. The display device 200 may expand an extraction image based on the upscaling ratio information. The display device 200 may obtain the conversion image by changing a horizontal size (or length) and/or a vertical size (or length) of the extraction image.

The electronic apparatus 200 may display the conversion image corresponding to each of the plurality of display modules based on structure information (S1580). A specific display module may display the conversion image including an area to be displayed by itself.

According to an example, an operation of obtaining the extraction image and an operation of obtaining the conversion image may be performed with respect to each of all the plurality of display modules.

According to an embodiment, the operation of obtaining the extraction image and the operation of obtaining the conversion image may be performed once in a processor or a controller representative of the display device 200, or the like, and the conversion image may be transmitted to each of the plurality of display modules.

FIG. 16 is a view illustrating an operation of providing a divided image to the display device.

With reference to FIG. 16, the electronic apparatus 100 may obtain an input image 1600. The electronic apparatus 100 may obtain a first divided image 1601 and a second divided image 1602 based on the number of main groups (two) and an area of the main group (left, right).

The electronic apparatus 100 may provide (or transmit) the first divided image 1601 to a first main group. The electronic apparatus 100 may provide (or transmit) the second divided image 1602 to a second main group.

The electronic apparatus 100 may classify modules 4, 8, 12, 16, 20, 24 connected in a horizontal direction of the plurality of display modules included in the main group as host modules and may classify modules 1, 2, 3, 5, 6, 7, 9, 10, 11, 13, 14, 15, 17, 18, 19, 21, 22, 23 connected in a vertical direction as sub modules.

A vertical direction or a horizontal direction as aforementioned and after-mentioned may be substituted with a preset direction. The vertical direction or the horizontal direction are merely an example, wherein the operations of the disclosure may be applied to a plurality of display modules disposed in various arrangements.

The electronic apparatus 100 may provide the first divided image 1601 to the first host module 1611 among the plurality of display modules included in the first main group. The electronic apparatus 100 may transmit the first divided image 1601 to a representative module (e.g. a twelfth module) of the first host module 1611. The first host module 1611 may transmit the first divided image 1601 to a first sub module 1612.

For example, a specific display module (e.g. a fourth module) included in the first host module 1611 may transmit the first divided image 1601 to a sub module (e.g. a first module, a second module, and a third module) corresponding to the plurality of specific display modules.

The electronic apparatus 100 may provide the second divided image 1602 to the second host module 1621 among the plurality of display modules included in the second main group. The electronic apparatus 100 may transmit the second divided image 1602 to a representative module (e.g. a sixteenth module) of the second host module 1621. The second host module 1621 may transmit the second divided image 1602 to a second sub module 1622.

For example, a specific display module (e.g. a twenty-fourth module) included in the second host module 1621 may transmit the second divided image 1602 to a sub module (e.g. a twenty-first module, a twenty-second module, and a twenty-third module) corresponding to the plurality of specific display modules.

FIG. 17 is a view illustrating an operation of changing structure information.

With reference to an example 1710 of FIG. 17, the display device 200 may include first to twenty-fourth display modules. A structure of the display device 200 may be changed. The reason for changing may be various.

As an example, a user may change arrangement of the existing display module.

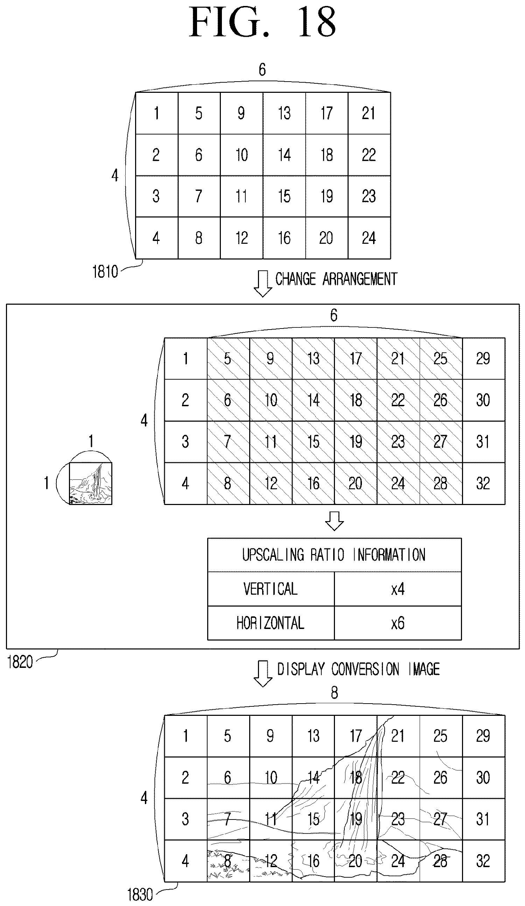

As an example, an additional display module may be disposed besides the existing display module. The description related to the above is described in FIGS. 17 and 18.

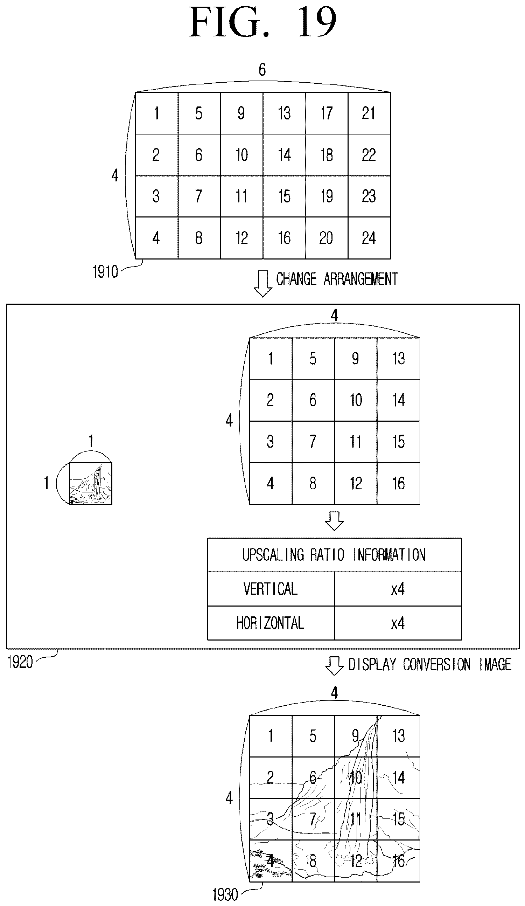

As an example, the existing display module may be excluded. The description related to the above is described in FIG. 19.

With reference to an example 1720 of FIG. 17, it is assumed that twenty-fifth to thirty-second display modules are additionally disposed. The electronic apparatus 100 may obtain structure information including positions of the changed display modules. The electronic apparatus 100 may obtain new structure information instead of the existing structure information. The electronic apparatus 100 may obtain new structure information by updating the existing structure information. The structure information before the update may be referred to as first structure information, and the structure information after the update may be referred to as second structure information.

The electronic apparatus 100 may obtain new upscaling ratio information based on the updated structure information.

The electronic apparatus 100 may obtain new target resolution based on the updated structure information. The new target resolution may be referred to as updated target resolution. The target resolution before the update may be described as first target resolution (e.g. 4:6), and the target resolution after the update may be described as second target resolution (e.g. 4:8).

The new upscaling ratio information of the electronic apparatus 100 may be described as updated upscaling ratio information. The upscaling ratio information before the update may be described as first upscaling ratio information, and the upscaling ratio information after the update may be described as second upscaling ratio information (4:8).

With reference to an example 1730, the display device 200 may display an image based on the updated upscaling ratio information.

FIG. 18 is a view illustrating an operation of changing structure information.

An example 1810 of FIG. 18 may correspond to the example 1710 of FIG. 17. The overlapped description is omitted.

With reference to an example 1820 of FIG. 18, it is assumed that twenty-fifth to thirty-second display modules are additionally disposed. The electronic apparatus 100 may obtain structure information including positions of the changed display modules. The electronic apparatus 100 may obtain new structure information instead of the existing structure information. The electronic apparatus 100 may obtain new structure information by updating the existing structure information. The structure information before the update may be referred to as first structure information, and the structure information after the update may be referred to as second structure information.

The electronic apparatus 100 may obtain new upscaling ratio information based on the updated structure information.

The electronic apparatus 100 may obtain new target resolution based on the updated structure information. The new target resolution may be referred to as updated target resolution. The target resolution before the update may be described as first target resolution (e.g. 4:6), and the target resolution after the update may be described as second target resolution (e.g. 4:6). The first target resolution (e.g. 4:6) may be the same as the second target resolution (e.g. 4:6).

The electronic apparatus 100 may obtain target resolution by using preset restrictive resolution. The preset restrictive resolution may include a restriction of vertical:horizontal ratio set by the user with respect to image provision. For example, the preset restrictive resolution may designate a ratio of 2:3 (vertical:horizontal). The preset restrictive resolution may include a concept of a ratio. Therefore, the preset restrictive resolution (2:3) may mean that a vertical to horizontal ratio of is 2:3 and may not designate an absolute length.

In a calculation process, if resolution exceeds the preset restrictive resolution, the electronic apparatus 100 may determine a target display module to display an image among the plurality of display modules. This is because if the resolution exceeds the preset restrictive resolution, the image may not be displayed on all of the display modules. The electronic apparatus 100 may identify a target display module with reference to a center position.

The preset restrictive resolution may include an upper limit ratio (e.g. 2:3) and a lower limit ratio (e.g. 1:1). If the lower limit ratio (e.g. 1:1) is applied, the display device 200 may not display an image in which a vertical length is longer.

With reference to an example 1820, the electronic apparatus 100 may identify the target display module as fifth to twenty-eighth modules. A criterion for identifying the target display module may be changed by a user setting.

The new upscaling ratio information of the electronic apparatus 100 may be described as updated upscaling ratio information. The upscaling ratio information before the update may be described as first upscaling ratio information, and the upscaling ratio information after the update may be described as second upscaling ratio information (4:6).

With reference to an example 1830, the display device 200 may display an image based on the updated upscaling ratio information.

In FIG. 18, it is described that if arrangement of the display module is changed, restrictive resolution is applied. However, the restrictive resolution may be always applied in a step of setting initial target resolution.

FIG. 19 is a view illustrating an operation of changing structure information.

An example 1910 of FIG. 19 may correspond to the example 1710 of FIG. 17. The overlapped description is omitted.

With reference to an example 1920 of FIG. 19, it is assumed that seventeenth to twenty-fourth modules are excluded.

The electronic apparatus 100 may obtain structure information including positions of the changed display modules. The electronic apparatus 100 may obtain new structure information instead of the existing structure information. The electronic apparatus 100 may obtain new structure information by updating the existing structure information. The structure information before the update may be referred to as first structure information, and the structure information after the update may be referred to as second structure information.

The electronic apparatus 100 may obtain new upscaling ratio information based on the updated structure information.

The electronic apparatus 100 may obtain new target resolution based on the updated structure information. The new target resolution may be referred to as updated target resolution. The target resolution before the update may be described as first target resolution (e.g. 4:6), and the target resolution after the update may be described as second target resolution (e.g. 4:4).

The new upscaling ratio information of the electronic apparatus 100 may be described as updated upscaling ratio information. The upscaling ratio information before the update may be described as first upscaling ratio information, and the upscaling ratio information after the update may be described as second upscaling ratio information (4:4).

With reference to an example 1930, the display device 200 may display an image based on the updated upscaling ratio information.

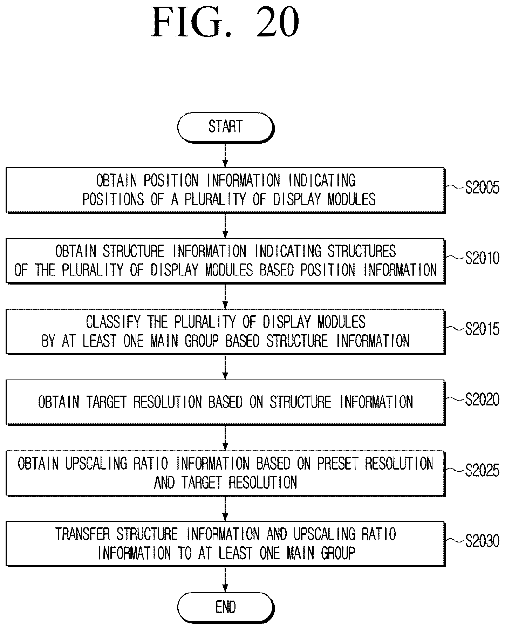

FIG. 20 is a view illustrating a method of controlling an electronic apparatus 100.

With reference to FIG. 20, a method of controlling an electronic apparatus 100 connected to a display device 200 including a plurality of display modules and storing preset resolution includes obtaining position information indicating positions of the plurality of display modules (S2005), obtaining structure information indicating structures of the plurality of display modules based on the position information (S2010), classifying the plurality of display modules as at least one main group based on the structure information (S2015), obtaining target resolution based on the structure information (S2020), obtaining upscaling ratio information based on the preset resolution and the target resolution (S2025), and transferring the structure information and the upscaling ratio information to the at least one main group (S2030), wherein the plurality of display modules may be modules which display an image based on the structure information and the upscaling ratio information.

The position information may include information indicating a position of each of the plurality of display modules, and the structure information may include at least one of a position, a sequence, or a shape of the plurality of display modules.

The control method may include obtaining an input image, obtaining main group information including the number of the at least one main group and an area of the at least one main group, obtaining a divided image by dividing the input image based on main group information, and transferring the divided image to the display device 200.

The obtaining the position information (S2005) may include receiving first position information from a first display module connected to the electronic apparatus 100, and receiving second position information from a second display module connected to the electronic apparatus 100, wherein the classifying as the main group includes classifying at least one display module identified from the first position information as a first main group, and classifying the at least one display module identified from the second position information as a second main group.

The obtaining the structure information (S2010) may include obtaining first structure information corresponding to the first main group based on the first position information, and obtaining second structure information corresponding to the second main group based on the second position information.

The transferring (S2030) may include transferring the upscaling ratio information and the first structure information to the first display module, and transferring the upscaling ratio information and the second structure information to the second display module.

The control method may include obtaining an input image, obtaining a first divided image and a second divided image by dividing the input image based a first area of the first main group and a second area of the second main group, transferring the first divided image to the first display module, and transferring the second divided image to the second display module.

The first divided image may be displayed by upscaling through the at least one display module classified as the first main group, and the second divided image may be displayed by upscaling through the at least one display module classified as the second main group.

The obtaining the target resolution (S2020) may include obtaining the target resolution based on preset restrictive resolution stored in the electronic apparatus 100, wherein the control method further include obtaining target module information including a target display module to display an image of plurality of display modules based on the target resolution, wherein the transferring (S2030) may include transferring the structure information, the upscaling ratio information, and target module information to the display device 200.

The target resolution may be first target resolution, and the upscaling ratio information may be first upscaling ratio information, wherein the control method, if the positions of the plurality of display modules included in the display device 200 are changed, may include obtaining new structure information indicating the positions of the plurality of changed display modules, obtaining second target resolution based on the new structure information, obtaining second upscaling ratio information based on the preset resolution and the second target resolution, and transferring second structure information and the second upscaling ratio information to the display device 200.

The aforementioned methods according to various embodiments of the disclosure may be implemented in a form of an application installable in the existing electronic apparatus.

The aforementioned methods according to various examples of the disclosure may be implemented only with a software upgrade or a hardware upgrade with respect to the existing electronic apparatus.

It is possible to implement various examples of the disclosure as above through an embedded server included in the electronic apparatus or an external server of at least one of the electronic apparatus or the display device.

According to an embodiment of the disclosure, various examples described above may be implemented as software including instructions stored in machine (e.g. a computer) readable storage media. The machine may refer to a device which calls instructions stored in the storage media and is operable according to the called instructions, wherein it may include an electronic apparatus according to the disclosed embodiments. If the instructions are executed by a processor, the processor may perform a function corresponding to the instructions directly or by using other components under control of the processor. The instructions may include a code generated or executed by a compiler or an interpreter. The machine readable storage medium may be provided in a form of a non-transitory storage medium. Here, the term 'non-transitory' merely means that the storage media do not include a signal and are tangible, wherein the term does not distinguish a case that data is stored in the storage media semipermanently from a case that data is stored in the storage media temporarily.

According to an embodiment of the disclosure, the method according to various examples described above may be provided to be included in a computer program product. The computer program product may be traded between a seller and a buyer as goods. The computer program product may be distributed in a form of a machine readable storage medium (e.g. compact disc read only memory (CD-ROM)) or on-line via an application store. In the case of on-line distribution, at least part of the computer program product may be stored at least temporarily or may be generated temporarily in a storage medium such as memory of a server of a manufacturer, a server of an application store, or a relay server.

Each of components (e.g. a module or a program) according to the various embodiments above may be configured as a single item or a plurality of items, wherein a partial subcomponent of the aforementioned relevant subcomponents may be omitted or another subcomponent may be further included in various embodiments. Mostly or additionally, some components (e.g. a module or a program) may be integrated into one item and may identically or similarly perform a function implemented by each of the relevant components before the integration. According to various embodiments, operations performed by a module, a program, or another component may be executed sequentially, in parallel, repetitively, or heuristically, at least part of the operations may be executed in different orders or be omitted, or another operation may be added.

As the above, preferable examples of the present disclosure are shown and described.

## Claims

1. An electronic apparatus, comprising:
an input/output (I/O) interface connected to a display device including a plurality of display modules;
memory storing preset resolution; and
at least one processor,
wherein the at least one processor is configured to:
obtain position information indicating positions of the plurality of display modules;
obtain structure information indicating structures of the plurality of display modules based on the position information;
classify the plurality of display modules as at least one main group based on the structure information;
obtain target resolution based on the structure information;
obtain upscaling ratio information based on the preset resolution and the target resolution; and
transfer the structure information and the upscaling ratio information to the at least one main group through the I/O interface,
wherein the plurality of display modules are modules which display an image based on the structure information and the upscaling ratio information.

2. The electronic apparatus of claim 1, wherein the position information includes information indicating a position of each of the plurality of display modules, and
wherein the structure information includes at least one of a position, a sequence, or a shape of the plurality of display modules.

3. The electronic apparatus of claim 1, wherein the at least one processor is configured to:
obtain an input image;
obtain main group information including the number of the at least one main group and an area of the at least one main group;
obtain a divided image by dividing the input image based on the main group information; and
transfer the divided image to the display device through the I/O interface.

4. The electronic apparatus of claim 1, wherein the at least one processor is configured to:
receive first position information from a first display module connected to the I/O interface;
receive second position information from a second display module connected to the I/O interface;
classify at least one display module identified from the first position information as a first main group; and
classify the at least one display module identified from the second position information as a second main group.

5. The electronic apparatus of claim 4, wherein the at least one processor is configured to:
obtain first structure information corresponding to the first main group based on the first position information; and
obtain second structure information corresponding to the second main group based on the second position information.

6. The electronic apparatus of claim 5, wherein the at least one processor is configured to:
transfer the upscaling ratio information and the first structure information to the first display module through the I/O interface; and
transfer the upscaling ratio information and the second structure information to the second display module through the I/O interface.

7. The electronic apparatus of claim 6, wherein the at least one processor is configured to:
obtain an input image;
obtain a first divided image and a second divided image by dividing the input image based on a first area of the first main group and a second area of the second main group;
transfer the first divided image to the first display module through the I/O interface; and
transfer the second divided image to the second display module through the I/O interface.

8. The electronic apparatus of claim 6, wherein the first divided image:
is displayed by upscaling through the at least one display module classified as the first main group, and
wherein the second divided image:
is displayed by upscaling through the at least one display module classified as the second main group.

9. The electronic apparatus of claim 1, wherein the at least one processor is configured to:
obtain the target resolution based on preset restrictive resolution stored in the memory;
obtain target module information including a target display module to display an image among the plurality of display modules based on the target resolution; and
transfer the structure information, the upscaling ratio information, and the target module information to the display device through the I/O interface.

10. The electronic apparatus of claim 1, wherein the target resolution is first target resolution,
wherein the upscaling ratio information is first upscaling ratio information, and
wherein the at least one processor is configured to:
based on the positions of the plurality of display modules included in the display device being changed, obtain new structure information indicating the positions of the plurality of changed display modules;
obtain second target resolution based on the new structure information;
obtain second upscaling ratio information based on the preset resolution and the second target resolution; and
transfer second structure information and the second upscaling ratio information to the display device through the I/O interface.

11. A method of controlling an electronic apparatus connected to a display device including a plurality of display modules and storing preset resolution, the method comprising:
obtaining position information indicating positions of the plurality of display modules;
obtaining structure information indicating structures of the plurality of display modules based on the position information;
classifying the plurality of display modules as at least one main group based on the structure information;
obtaining target resolution based on the structure information;
obtaining upscaling ratio information based on the preset resolution and the target resolution; and
transferring the structure information and the upscaling ratio information to the at least one main group,
wherein the plurality of display modules are modules which display an image based on the structure information and the upscaling ratio information.

12. The method of claim 11, wherein the position information includes information indicating a position of each of the plurality of display modules, and
wherein the structure information includes at least one of a position, a sequence, or a shape of the plurality of display modules.

13. The method of claim 11, wherein the method comprises:
obtaining an input image;
obtaining main group information including the number of the at least one main group and an area of the at least one main group;
obtaining a divided image by dividing the input image based on the main group information; and
transferring the divided image to the display device.

14. The method of claim 11, wherein the obtaining the position information includes:
receiving first position information from a first display module connected to the electronic apparatus; and
receiving second position information from a second display module connected to the electronic apparatus, and
wherein the classifying as the main group includes:
classifying at least one display module identified from the first position information as a first main group; and
classifying the at least one display module identified from the second position information as a second main group.

15. The method of claim 14, wherein the obtaining the structure information includes:
obtaining first structure information corresponding to the first main group based on the first position information; and
obtaining second structure information corresponding to the second main group based on the second position information.
